# EUROPÄISCHE PATENTSCHRIFT

(11) **EP 2 647 457 B1**
(45) Veröffentlichungstag und Bekanntmachung des Hinweises auf die Patenterteilung: **16.09.2015**
(21) Anmeldenummer: 13162147.6
(22) Anmeldetag: 03.04.2013
(51) Int. Cl.: B23D 45/12, B26D 3/16

(54) **Maschine zum Abtrennen von Abschnitten von stangen- oder rohrförmigen Werkstücken**
Machine for cutting lengths of rod-shaped or tubular workpieces
Machine de séparation de sections de pièces à usiner cylindriques ou en forme de tige

(30) Priorität: 05.04.2012 DE 102012103014
(43) Veröffentlichungstag der Anmeldung: 09.10.2013
(73) Patentinhaber: Walter Möck GmbH, 72820 Sonnenbühl (DE)
(72) Erfinder: Möck, Manuel, 72766 Reutlingen (DE)
(74) Vertreter: Kohler Schmid Möbus Patentanwälte

(56) Entgegenhaltungen:
- DE-A1- 1 477 911
- DE-A1- 3 222 540

## Beschreibung

Die Erfindung bezieht sich auf eine Maschine zum Abtrennen von Abschnitten von langen zylindrischen Werkstücken aus Hohl- oder Vollmaterial nach dem Oberbegriff des Anspruchs 1. Eine solche Maschine ist aus der DE 14 77 911 A1 bereits bekannt. Sie weist zwei rotierend antreibbare Werkstückhalterungen auf, von denen zumindest eine auf das Werkzeug zu bewegbar ist. Der Nachteil dieser bekannten Maschine besteht darin, dass ein sehr langer Endbereich des Werkstücks nicht bearbeitet werden kann. Das nicht bearbeitbare Endstück weist eine Länge auf, die mindestens der Summe der Längen der Werkzeughalterungen entspricht. Bei der bekannten Maschine entsteht somit sehr viel Abfall, oder das Endstück muss mit einer externen Einrichtung aufgenommen und umgespannt werden, was aufwändig und teuer ist.

Aus der DE 10 2009 035 839 A1 ist ebenfalls eine Vorrichtung zur Bearbeitung von rohr- oder stangenförmigen Werkstücken bekannt, in der das Werkstück ebenfalls rotierend angetrieben wird. Mit einer entlang des Werkstücks verfahrbaren Kreissäge werden nacheinander Abschnitte von diesem Werkstück abgetrennt. Die abgetrennten Abschnitte fallen entweder innerhalb der Maschine nach unten und werden von dort mit einem Greifersystem abtransportiert oder die Abschnitte werden von einem Abholfutter aufgenommen und durch Drehen des Abholfutters um 180° aus der Maschine herausbewegt. Diese Vorrichtung eignet sich insbesondere zur Bearbeitung sehr großer und schwerer Werkstücke.

Der vorliegenden Erfindung liegt die Aufgabe zugrunde, eine Vorrichtung zu schaffen, mit der das Werkstück bis auf ein sehr kurzes Endstück über seine gesamte Länge bearbeitet werden kann und bei der insbesondere bei leichteren Werkstücken ein Abtrennen von Abschnitten in der Weise möglich ist, dass die abgetrennten Abschnitte direkt auf ein außerhalb der Vorrichtung befindliches Transportsystem übergeben werden können.

Die Aufgabe wird gelöst mit einer Maschine zum Abtrennen von Abschnitten von stangen- oder rohrförmigen Werkstücken mit den Merkmalen des Anspruchs 1.

Mit dieser Maschine können die Abschnitte von dem stangen- oder rohrförmigen Werkstück in der gleichen effektiven Weise wie bei den bekannten Vorrichtungen abgetrennt werden. Die abgetrennten Abschnitte fallen hier jedoch nicht in die Maschine oder werden von einem Abholfutter aufgenommen. Sie fallen vielmehr hinter der Werkzeugeinheit aus der Maschine. Dort kann zu ihrer Aufnahme ein Sammelbehälter oder ein Transportband oder dergleichen angeordnet sein. Die erfindungsgemäße Maschine benötigt somit kein Greifersystem oder ein Abholfutter, um die abgetrennten Abschnitte aus der Maschine herauszubewegen. Weiter ist es insbesondere bei leichteren Werkstücken von Vorteil, dass die Antriebseinheit den Vorschub des Werkstücks übernimmt. Die Werkzeugeinheit kann somit feststehend ausgebildet werden.

Dazu kann die Antriebseinheit vorteilhafterweise als ein linear verschiebbar gelagertes und rotierend antreibbares Spannfutter ausgebildet sein. Mit diesem Futter lassen sich sowohl stangen- als auch rohrförmige Werkstücke sicher spannen und in Rotation versetzen. Durch die lineare Verschiebbarkeit des Futters ist der Werkstückvorschub zur Werkzeugeinheit, um sukzessive mehrere Abschnitte von dem Werkstück abtrennen zu können, gewährleistet.

Als Trennwerkzeug kommen insbesondere eine Kreissäge oder eine Bandsäge in Frage. Ein Abtrennen der Abschnitte kann jedoch auch auf andere Weise, beispielsweise mittels Laser oder Wasserstrahl erfolgen. Die Spanneinrichtung ist ein Spannstock, dessen Spannbacken soweit auseinanderfahrbar sind, dass die Antriebseinheit zwischen die Spannbacken bewegt werden kann. Auf diese Weise kann sichergestellt werden, dass das Reststück des Werkstücks, von dem wegen des Spannens und der Platzverhältnisse keine Abschnitte mehr abgetrennt werden können, sehr kurz ist. Bis auf den in der Antriebseinheit eingespannten Endbereich kann das Werkstück über seine ganze Länge bearbeitet werden.

Insbesondere für die Bearbeitung besonders langer und/oder schwerer Werkstücke ist es außerdem von Vorteil, wenn zwischen der Antriebseinheit und der Spanneinrichtung mindestens eine Abstützung für das Werkstück angeordnet ist. Dies erlaubt eine präzise Zuführung des Werkstücks zur Spanneinrichtung und damit auch ein genaues Spannen und Bearbeiten des Werkstücks.

Vorzugsweise kann dabei die mindestens eine Abstützung aus dem Bewegungsbereich der Antriebseinheit herausbewegbar sein, wenn die Antriebseinheit auf die Werkzeugeinheit zu bewegt wird und in den Bereich der Abstützung gelangt. Die Abstützung behindert dann den weiteren Vorschub des Werkstücks nicht. Auch bei der Bearbeitung kürzerer Werkstücke, die beim Vorschub und Spannen keiner Abstützung bedürfen, kann die mindestens eine Abstützung aus dem Bewegungsbereich der Antriebseinheit herausbewegt und damit inaktiv bleiben.

Die mindestens eine Abstützung kann vorteilhafterweise von höhenverstellbaren Rollen gebildet sein. Die Höhenverstellbarkeit erlaubt die Anpassung an Werkstücke unterschiedlichen Durchmessers. Die Höhenverstellung kann auch derart gestaltet werden, dass die Rollen bis unterhalb des Bewegungsbereichs der Antriebseinheit abgesenkt werden können, damit der Vorschub des Werkstücks durch die Antriebseinheit bis dicht an die Spanneinrichtung heran nicht behindert wird.

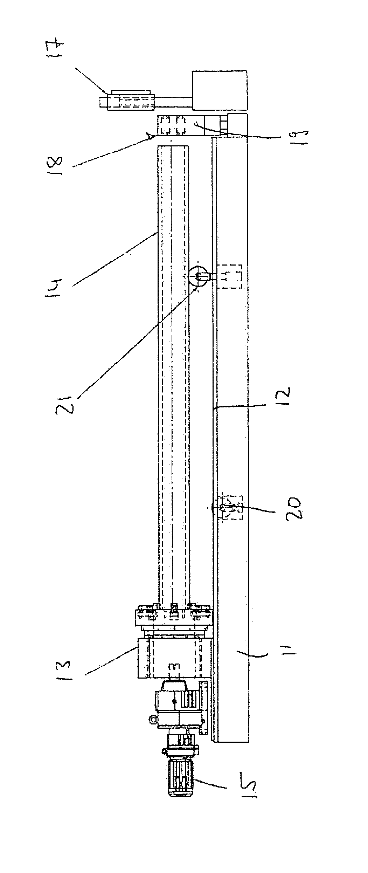

Im Folgenden wird ein bevorzugtes Ausführungsbeispiel einer erfindungsgemäßen Maschine anhand der Zeichnung im Detail beschrieben.

Die einzige Figur zeigt eine perspektivische Ansicht einer Maschine 10 mit einem Maschinenbett 11, auf dem Schienen 12 für eine Antriebseinheit 13 angeordnet sind. Die Antriebseinheit 13 ist als Spannfutter für ein Werkstück 14 ausgebildet und kann mittels eines Motors 15 rotierend angetrieben werden. Die Antriebseinheit 13 sitzt auf einem Schlitten 16 und kann somit entlang der Schienen 12 auf eine Werkzeugeinheit 17, hier eine Bandsäge, zu bewegt werden. Die Antriebseinheit 13 übernimmt daher auch den Vorschub des Werkstücks 14, sodass von diesem nach und nach mehrere Abschnitte durch die Bandsäge 17 abgetrennt werden können.

Unmittelbar vor der Werkzeugeinheit 17 ist eine Spanneinrichtung 18 angeordnet, die hier als Spannstock mit zwei relativ zueinander beweglichen Spannbacken 19 ausgeführt ist. Die Spannbacken 19 können dabei soweit seitlich auseinander gefahren werden, dass die Antriebseinheit 13 zwischen sie bis unmittelbar vor die Werkzeugeinheit 17 hineinfahren kann. Somit kann das Werkstück 14 bis auf ein kurzes Reststück in einzelne Abschnitte zertrennt werden. Die abgetrennten Abschnitte fallen rechts von der Werkzeugeinheit 17 aus der Maschine 10 bspw. auf ein hier nicht dargestelltes Transportband.

Zur sicheren Zuführung des Werkstücks 14 zur Werkzeugeinheit 17 und Spannen in der Spanneinrichtung 18 sind außerdem zwei Abstützungen 20, 21 vorgesehen, die jeweils zwei höhenverstellbare kegelförmige Rollen 22 aufweisen. Die Höhenverstellbarkeit der Rollen 22 erlaubt zum einen das Anstellen gegen Werkstücke 14 unterschiedlichen Durchmessers und zum anderen ein Absenken der Rollen 22 bis unterhalb der Schienen 16, wie im Beispiel der Abstützung 20 gezeigt. Im abgesenkten Zustand behindern sie weder die Rotationsbewegung des Werkstücks 14 während dessen Bearbeitung noch die Bewegung der Antriebseinheit 13 entlang der Schienen 12.

Es versteht sich, dass auch andere Werkzeuge an der Werkzeugeinheit 17 vorgesehen sein könnten, die eine zusätzliche Bearbeitung der Werkstücke 14 erlauben. Die Bandsäge könnte außerdem durch ein anderes Trennwerkzeug, bspw. eine Kreissäge ersetzt werden.

## Patentansprüche

1. Maschine zum Abtrennen von Abschnitten von stangen- oder rohrförmigen Werkstücken (14) mit einer Werkzeugeinheit (17), an der mindestens ein Trennwerkzeug angeordnet ist, mit einer Antriebseinheit (13), mit der das Werkstück (14) an einem Ende gespannt und rotierend angetrieben werden kann und die auf die Werkzeugeinheit (17) zu bewegbar ist, und mit einer vor der Werkzeugeinheit (17) angeordneten Spanneinrichtung (18) zur Fixierung des vorderen Bereichs des Werkstücks (14), **dadurch gekennzeichnet, dass** die Spanneinrichtung (18) ein Spannstock ist, dessen Spannbacken (19) soweit auseinanderfahrbar sind, dass die Antriebseinheit (13) zwischen die Spannbacken (19) bewegt werden kann.

2. Maschine nach Anspruch 1, **dadurch gekennzeichnet, dass** die Antriebseinheit (13) ein linear verschiebbar gelagertes und rotierend antreibbares Spannfutter ist.

3. Maschine nach Anspruch 1 oder 2, dass als Trennwerkzeug mindestens eine Kreissäge oder eine Bandsäge vorgesehen sind.

4. Maschine nach einem der Ansprüche 1 bis 3, **dadurch gekennzeichnet, dass** zwischen der Antriebseinheit (13) und der Spanneinrichtung (18) mindestens eine Abstützung (20, 21) für das Werkstück (14) angeordnet ist.

5. Maschine nach Anspruch 4, **dadurch gekennzeichnet, dass** die mindestens eine Abstützung (20, 21) während des Werkstückvorschubs aus dem Bewegungsbereich der Antriebseinheit (13) herausbewegbar ist.

6. Maschine nach Anspruch 4 oder 5, **dadurch gekennzeichnet, dass** die mindestens eine Abstützung (20, 21) von höhenverstellbaren Rollen (22) gebildet ist.

## Claims

1. Machine for cutting off lengths of tubular workpieces or workpieces in rod form (14), having a tool unit (17) on which at least one cutting tool is arranged, having a drive unit (13) to which one end of the workpiece (14) can be clamped and by which it can be driven in rotation and which can be moved towards the tool unit (17), and having arranged upstream of the tool unit (17) a clamping means (18) to fix the front region of the workpiece (14) in position, **characterised in that** the clamping means (18) is a vice whose jaws (19) can be moved apart sufficiently far for the drive unit (13) to be able to be moved between the jaws (19).

2. Machine according to claim 1, **characterised in that** the drive unit (13) is a chuck which is mounted to be displaceable in a straight line and which can be driven in rotation.

3. Machine according to claim 1 or 2, **characterised in that** what is provided as a cutting tool is at least one circular saw or band-saw.

4. Machine according to one of claims 1 to 3, **characterised in that** at least one support (20, 21) for the workpiece (14) is arranged between the drive unit (13) and the clamping means (18).

5. Machine according to claim 4, **characterised in that**, during the forward feed of the workpiece, the at least one support (20, 21) can be moved out of the region through which the drive unit (13) moves.

6. Machine according to claim 4 or 5, **characterised in that** the at least one support (20, 21) is formed by rollers (22) which can be adjusted vertically.

## Revendications

1. Machine destinée à la séparation de tronçons de pièces (14) en forme de barre ou de tube, avec une unité d'outil (17) sur laquelle est disposée au moins un outil de séparation, avec une unité d'entraînement (13) avec laquelle la pièce (14) peut être serrée à une extrémité et entraînée en rotation et qui peut être déplacée vers l'unité d'outil (17), et avec un dispositif de serrage (18) disposé devant l'unité d'outil (17) pour la fixation de la zone avant de la pièce (14), **caractérisée en ce que** le dispositif de serrage (18) est une bride de serrage dont les mâchoires de serrage (19) peuvent être écartées l'une de l'autre au point que l'unité d'entraînement (13) peut être déplacée entre les mâchoires de serrage (19).

2. Machine selon la revendication 1, **caractérisée en ce que** l'unité d'entraînement (13) est un mandrin de serrage supporté de façon à pouvoir se déplacer linéairement et pouvant être entraîné en rotation.

3. Machine selon la revendication 1 ou 2, **caractérisée en ce qu'**au moins une scie circulaire ou une scie à ruban sont prévues en tant qu'outil de séparation.

4. Machine selon l'une des revendications 1 à 3, **caractérisée en ce que**, entre l'unité d'entraînement (13) et le dispositif de serrage (18), il est disposé au moins un support (20, 21) pour la pièce (14).

5. Machine selon la revendication 4, **caractérisée en ce que** le support (20, 21) au moins au nombre de un peut être déplacé hors de la zone de mouvement de l'unité d'entraînement (13) pendant l'avance de la pièce.

6. Machine selon la revendication 4 ou 5, **caractérisée en ce que** le support (20, 21) au moins au nombre de un est formé de galets (22) réglables en hauteur.
